# EUROPÄISCHE PATENTSCHRIFT

(11) **EP 3 560 850 B1**
(45) Veröffentlichungstag und Bekanntmachung des Hinweises auf die Patenterteilung: **25.11.2020**
(21) Anmeldenummer: 18168660.1
(22) Anmeldetag: 23.04.2018
(51) Int. Cl.: B65B 35/18, B65G 47/91, B65G 47/90

(54) **ÜBERGABEEINHEIT UND VERFAHREN ZUM TRANSFERIEREN VON BLISTERPACKUNGEN**
TRANSFER UNIT AND METHOD FOR TRANSFERRING BLISTER PACKS
UNITÉ DE TRANSFERT ET PROCÉDÉ DE TRANSFERT DES PLAQUETTES THERMOFORMÉES

(43) Veröffentlichungstag der Anmeldung: 30.10.2019
(73) Patentinhaber: Uhlmann Pac-Systeme GmbH & Co. KG, 88471 Laupheim (DE)
(72) Erfinder: Haller, Thomas, 88289 Waldburg (DE); Hähnel, Bernd, 76297 Stutensee (DE)
(74) Vertreter: Wächter, Jochen

(56) Entgegenhaltungen:
- EP-A1- 2 840 030
- WO-A1-2014/181307
- DE-A1-102004 043 332
- DE-A1-102006 047 925

## Beschreibung

Die vorliegende Erfindung betrifft eine Übergabeeinheit und ein Verfahren zum Transferieren von Blisterpackungen.

Blisterpackungen werden häufig in der pharmazeutischen Industrie bei der Verpackung von medizinischen Produkten verwendet. Hierbei wird zunächst in einer Folienbahn eine Vielzahl von Näpfen gebildet, in welche Produkte, wie etwa Dragees oder Tabletten, aber auch Spritzen, Vials, Ampullen usw., eingebracht werden. Anschließend kann die Folienbahn mit den befüllten Näpfen mit einer Deckfolie versiegelt werden. Danach wird sie einer Stanzstation zugeführt, in der die jeweiligen Blisterpackungen aus der Folienbahn ausgestanzt werden.

In einer weiteren Phase des Verpackungsprozesses werden die ausgestanzten Blisterpackungen mit Hilfe einer Transferiervorrichtung an ein Fördermittel übertragen. Die Blisterpackungen werden dabei in jeweiligen Aufnahmen des Fördermittels abgelegt. Abschließend werden die auf dem Fördermittel angeordneten Stapel von Blisterpackungen einer Verpackungsstation zugeführt, in der die Blisterpackungen in entsprechende Verpackungen eingebracht werden. Die Zeit, welche die Transferiervorrichtung für die Übergabe von Blisterpackungen von der Stanzstation an das Fördermittel benötigt, hat logischerweise einen Einfluss auf den Durchsatz der gesamten Verpackungsmaschine.

Dokument EP-A-2 840 030 beschreibt eine Vorrichtung zum Transferieren von Blisterpackungen, die zwei Saugerarme aufweist. Die Saugerarme sind jeweils um zwei senkrecht zueinander verlaufende Achsen drehbar, so dass eine kombinierte Drehbewegung entsteht. Mit den Saugerarmen werden Blisterpackungen wechselweise von einer Stanzstation zu einem Fördermittel transferiert. Die Blisterpackungen werden mittels die beiden Saugerarme von dergleichen Aufnahmeposition zu dergleichen Abgabeposition transferiert.

Der Erfindung liegt die Aufgabe zugrunde, eine verbesserte Übergabeeinheit und ein Verfahren zum Transferieren von Blisterpackungen zu schaffen, wobei der Transfer von Blisterpackungen besonders effizient, präzise und schnell erfolgt.

Diese Aufgabe wird durch die Merkmale des Anspruchs 1 und des Anspruchs 13 gelöst.

Die erfindungsgemäße Übergabeeinheit zum Transferieren von Blisterpackungen umfasst einen ersten Transferarm, der bewegbar ist zwischen einer ersten Aufnahmestellung zum Aufnehmen einer ersten Blisterpackung von einer ersten Aufnahmeposition und einer ersten Abgabestellung zum Ablegen der ersten Blisterpackung in einer ersten Abgabeposition, und einen zweiten Transferarm, der bewegbar ist zwischen einer zweiten Aufnahmestellung zum Aufnehmen einer zweiten Blisterpackung von einer zweiten Aufnahmeposition und einer zweiten Abgabestellung zum Ablegen der zweiten Blisterpackung in einer zweiten Abgabeposition. Der erste und zweite Transferarm sind zu beiden Seiten einer Längsmittelebene der Übergabeeinheit angeordnet. Jeder Transferarm weist ein erstes Segment und ein zweites Segment auf, wobei das erste Segment jedes Transferarms um eine zugehörige erste Achse, die senkrecht zur Längsmittelebene verläuft, drehbar befestigt ist. Das erste Segment jedes Transferarms weist einen Abschnitt auf, an dem das zweite Segment drehbar um eine zur zugehörigen ersten Achse im Wesentlichen senkrecht verlaufende ortsveränderliche zweite Achse befestigt ist, wobei an dem zweiten Segment ein Halteorgan zum Aufnehmen und Halten einer Blisterpackung angeordnet ist. Die Transferarme sind derart ausgestaltet und angesteuert, dass die Bewegung der Transferarme von der ersten oder zweiten Aufnahmestellung zur ersten oder zweiten Abgabestellung und zurück eine kombinierte Bewegung ist, die sich zumindest aus einer ersten Drehbewegung des ersten Segments und des zweiten Segments um die erste Achse und einer zweiten Drehbewegung des zweiten Segments um die zweite Achse zusammensetzt. Die erste und zweite Aufnahmeposition sind im Bereich der Längsmittelebene in einer Längsreihe hintereinander angeordnet und die erste und zweite Abgabeposition sind bezüglich der Längsmittelebene nach außen versetzt angeordnet. Die zweite Achse des ersten Transferarms ist derart angeordnet, dass sich die zweite Achse des ersten Transferarms während der ersten Drehbewegung des ersten Segments des ersten Transferarms in einer ersten Ebene bewegt, die die erste Aufnahmeposition oder deren seitliche Projektion in einer ersten geraden Linie schneidet, die seitlich versetzt zur Mitte der ersten Aufnahmeposition ist. Die zweite Achse des zweiten Transferarms ist derart angeordnet, dass sich die zweite Achse des zweiten Transferarms während der ersten Drehbewegung des ersten Segments des zweiten Transferarms in einer zweiten Ebene bewegt, die die zweite Aufnahmeposition oder deren seitliche Projektion in einer zweiten geraden Linie schneidet, die seitlich versetzt zur Mitte der zweiten Aufnahmeposition ist.

Auf diese Weise wird eine zuverlässige Übergabe von Blisterpackungen gewährleistet, bei der auf einfache Weise und mit hohem Durchsatz Blisterpackungen aus einer Linie auf zwei Linien verteilt werden.

Vorzugsweise sind die ersten Achsen des ersten und zweiten Transferarms parallel zueinander, aber in Längsrichtung in einem Abstand zueinander angeordnet. Außerdem ist es bevorzugt, dass das Halteorgan jedes Transferarms mindestens einen Haltekopf umfasst und dass der Abstand des mindestens einen Haltekopfs des ersten Transferarms zur ersten Achse des ersten Transferarms größer ist als der Abstand des mindestens einen Haltekopfs des zweiten Transferarms zur ersten Achse des zweiten Transferarms. Auf diese Weise gelingt es, den Längsversatz der Blisterpackungen während der Übergabe auszugleichen.

In diesem Zusammenhang ist es vorteilhaft, wenn die erste Aufnahmeposition in Längsrichtung weiter von der ersten und zweiten Abgabeposition entfernt ist als die zweite Aufnahmeposition, die erste Achse des ersten Transferarms in Längsrichtung in der Mitte zwischen der ersten Aufnahmeposition und der ersten Abgabeposition angeordnet ist, und die erste Achse des zweiten Transferarms in Längsrichtung in der Mitte zwischen der zweiten Aufnahmeposition und der zweiten Abgabeposition angeordnet ist.

Vorzugsweise sind die Transferarme derart ausgestaltet und angesteuert, dass die Blisterpackungen an der ersten und zweiten Aufnahmeposition von den Halteorganen des ersten und zweiten Transferarms von oben aufgenommen und ebenfalls von oben in die Abgabepositionen abgelegt werden. Durch die Aufnahme der Blisterpackungen von oben können die Blisterpackungen an den Aufnahmepositionen flach liegen. Die Abgabe der Blisterpackungen in den Abgabepositionen von oben gewährleistet einen möglichst flexiblen Freigabezeitpunkt der Blisterpackungen durch die Halteorgane.

Es ist bevorzugt, dass das zweite Segment des ersten oder zweiten Transferarms in der ersten oder zweiten Aufnahmestellung jeweils bezüglich der Längsmittelebene nach innen geschwenkt ist, und dass das zweite Segment des ersten oder zweiten Transferarms in der ersten oder zweiten Abgabestellung jeweils bezüglich der Längsmittelebene nach außen geschwenkt ist. Durch diese Gestaltung wird der seitliche Versatz der Blisterpackungen während der Übergabe auf konstruktiv einfache Weise realisiert.

In vorteilhafter Weise führen die zweiten Segmente und somit die an den Halteorganen gehaltenen Blisterpackungen eine Drehbewegung um die jeweilige zweite Achse von im Wesentlichen 180° aus, wenn sich die Transferarme von der ersten oder zweiten Aufnahmestellung zur ersten oder zweiten Abgabestellung oder umgekehrt bewegen. Diese Drehbewegung sorgt auf einfache Weise dafür, dass sich die Blisterpackungen während der Übergabe um 180° um ihre Mittelpunkte drehen. Dies wiederum gewährleistet, dass die Blisterpackungen mit der Deckfolienseite bzw. der offenen Seite nach oben abgelegt werden können.

Bevorzugt führen die ersten Segmente eine Drehbewegung um die zugehörige erste Achse von 60° bis 180°, mehr bevorzugt 120° bis 180° aus, wenn sich die Transferarme von der ersten oder zweiten Aufnahmestellung zur ersten oder zweiten Abgabestellung oder umgekehrt bewegen. Während die Abgabepositionen in der Regel horizontal angeordnet sind, können die Aufnahmepositionen horizontal, vertikal oder auch schräg angeordnet sein. Der angegebene Winkelbereich deckt alle Möglichkeiten der Anordnung der Aufnahmepositionen ab. Außerdem ist es denkbar, dass die Halteorgane vom zweiten Segment der Transferarme jeweils schräg abragen, sodass das erste Segment lediglich über einen geringeren Winkelbereich verschwenkt werden muss als der Winkel, der von den Blisterpackungen von den Aufnahmepositionen zu den Abgabepositionen zurückzulegen ist.

Vorzugsweise sind der erste und zweite Transferarm derart angesteuert, dass der erste und zweite Transferarm gegenläufige hin- und hergehende Schwenkbewegungen ausführen. Auf diese Weise kann der Durchsatz der Übergabeeinheit erhöht werden.

Zur Anpassung an verschiedene Formate der Blisterpackungen und des gewünschten seitlichen Versatzes der Blisterpackungen bei der Übergabe können die Transferarme parallel zur zugehörigen ersten Achse verschiebbar gelagert sein.

Es ist bevorzugt, dass das Halteorgan jedes Transferarms mindestens einen Haltekopf umfasst, der mittels mindestens eines Trägerarms am zweiten Segment befestigt ist. Besonders bevorzugt ist der mindestens eine Trägerarm starr an dem zweiten Segment befestigt.

Das erfindungsgemäße Verfahren zum Transferieren von Blisterpackungen von einer ersten und zweiten Aufnahmeposition zu einer ersten und zweiten Abgabeposition mittels einer Übergabeeinheit umfasst folgende Schritte:
- Bereitstellen einer ersten und einer zweiten Blisterpackung in einer ersten und einer zweiten Aufnahmeposition, wobei die Blisterpackungen in der ersten und zweiten Aufnahmeposition in einer Längsreihe, die parallel zu einer Längsmittelebene der Übergabeeinheit und im Bereich der Längsmittelebene verläuft, hintereinander angeordnet sind;
- Aufnehmen der ersten Blisterpackung in der ersten Aufnahmeposition, Bewegen der ersten Blisterpackung und Ablegen der ersten Blisterpackung in der ersten Abgabeposition, wobei die erste Blisterpackung in der ersten Abgabeposition von oben abgelegt wird, wobei die erste Blisterpackung in der ersten Abgabeposition bezüglich der Längsmittelebene nach außen versetzt angeordnet ist, und wobei die erste Blisterpackung in der ersten Abgabeposition im Vergleich zur ersten Aufnahmeposition um 180° um ihren Mittelpunkt gedreht abgelegt wird; und
- Aufnehmen der zweiten Blisterpackung in der zweiten Aufnahmeposition, Bewegen der zweiten Blisterpackung und Ablegen der zweiten Blisterpackung in der zweiten Abgabeposition, wobei die zweite Blisterpackung in der zweiten Abgabeposition von oben abgelegt wird, wobei die zweite Blisterpackung in der zweiten Abgabeposition bezüglich der Längsmittelebene nach außen versetzt angeordnet ist, und wobei die zweite Blisterpackung in der zweiten Abgabeposition im Vergleich zur zweiten Aufnahmeposition um 180° um ihren Mittelpunkt gedreht abgelegt wird.

Auf diese Weise wird eine zuverlässige Übergabe von Blisterpackungen gewährleistet, bei der auf einfache Weise und mit hohem Durchsatz Blisterpackungen aus einer Linie auf zwei Linien verteilt werden.

Bevorzugt werden die Blisterpackungen an der ersten und zweiten Aufnahmeposition von oben aufgenommen, und die Blisterpackungen sind in der ersten und zweiten Aufnahmeposition und in der ersten und zweiten Abgabeposition jeweils mit derselben Seite nach oben angeordnet. Durch diese Maßnahmen werden das Aufnehmen und das Abgeben der Blisterpackungen erleichtert. Außerdem können auf diese Weise Halteorgane zum Aufnehmen und Halten der Blisterpackungen in der Übergabeeinheit verwendet werden.

Es ist vorteilhaft, wenn die erste und zweite Blisterpackung während des Bewegens von der ersten und zweiten Aufnahmeposition zur ersten und zweiten Abgabeposition einen entgegengesetzten seitlichen Versatz quer zur Längsmittelebene vollziehen. Auf diese Weise kann der seitliche Versatz jeder Blisterpackung auf die Hälfte des Abstands zwischen den Abgabepositionen reduziert werden.

Weitere Eigenschaften und Vorteile der vorliegenden Erfindung ergeben sich aus der nachfolgenden Beschreibung unter Bezugnahme auf die Zeichnungen.
- Fig. 1: ist eine schematische Perspektivansicht einer erfindungsgemäßen Übergabeeinheit zum Transferieren von Blisterpackungen;
- Fig. 2: ist eine Draufsicht auf die Übergabeeinheit aus Fig. 1;
- Fig. 3 bis 6: sind schematische Perspektivansichten der Übergabeeinheit aus Fig. 1, die unterschiedliche Stadien des Übergabeprozesses darstellen;
- Fig. 7: ist eine schematische Perspektivansicht von zwei Transferarmen, die bei der Übergabeeinheit gemäß Fig. 1 verwendet werden;
- Fig. 8: ist eine schematische Perspektivansicht der wesentlichen Antriebskomponenten eines Transferarms aus Fig. 7;
- Fig. 9: ist eine Querschnittsansicht zur Darstellung des inneren Aufbaus eines Transferarms aus Fig. 7; und
- Fig. 10: ist eine schematische Perspektivansicht eines Mechanismus zur Anpassung der Drehbewegung des zweiten Segments des Transferarms aus Fig. 9 um die zweite Achse.

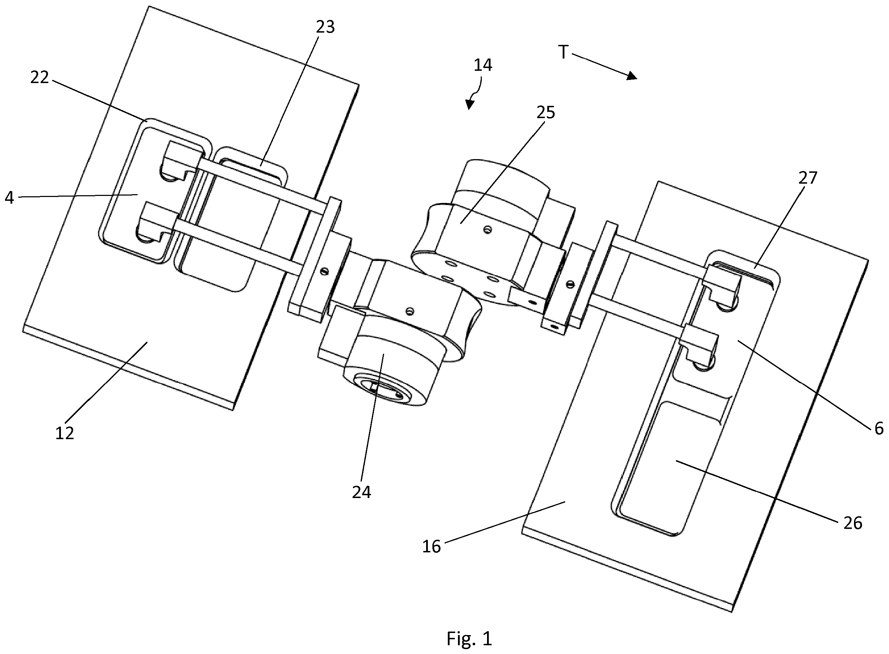

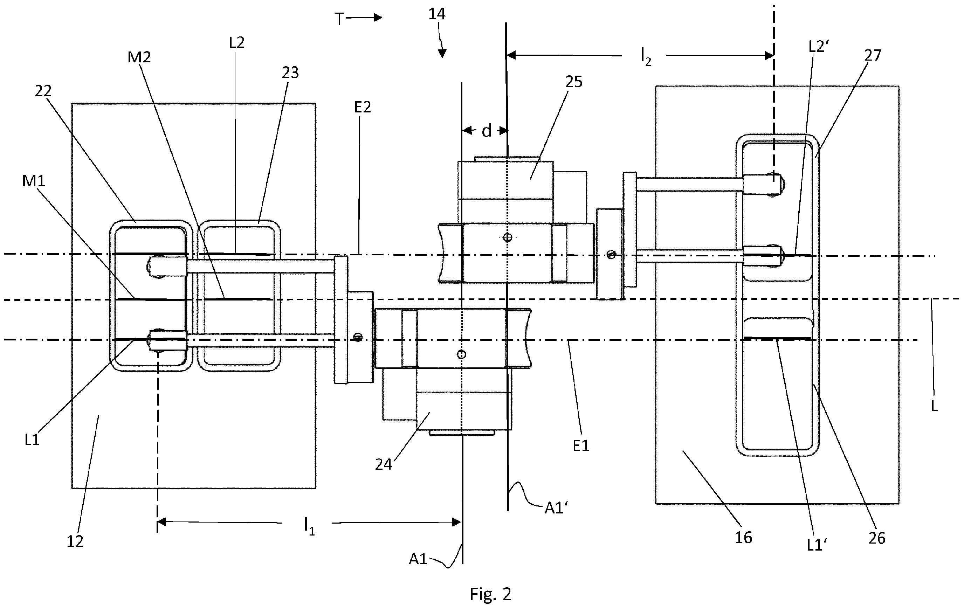

Fig. 1 bis 6 zeigt eine Übergabeeinheit 14 zum Transferieren von Blisterpackungen 4, 6. Die Blisterpackungen 4, 6 enthalten vorzugsweise medizinische Produkte wie Spritzen, Ampullen, Vials etc., können aber auch Tabletten oder andere Produkte enthalten. In Fig. 1 und Fig. 3 bis 6 ist die Übergabeeinheit 14 zum Transferieren von Blisterpackungen 4, 6 in verschiedenen Stadien des Übergabeprozesses dargestellt. Fig. 2 ist eine Draufsicht auf die Übergabeeinheit 14.

Die Übergabeeinheit 14 dient zum Transferieren von Blisterpackungen 4, 6 von einer Zwischenablage 12 zu einem Fördermittel 16. Die Transferrichtung der Blisterpackungen 4, 6 ist in den Figuren durch den Pfeil T gekennzeichnet.

Die bewegte oder nicht bewegte Zwischenablage 12 und das Fördermittel 16 sind in den Figuren lediglich schematisch dargestellt. Die Zwischenablage 12 ist bevorzugt ein Drehteller. Anstatt in der Zwischenablage 12 können die Aufnahmepositionen 22, 23 der Blisterpackungen 4, 6 auch in einer Stanzstation (nicht dargestellt) liegen. Ebenso ist es möglich, dass im Ausgangsbereich der Stanzstation ein Transportmittel (nicht dargestellt) vorgesehen ist, das die Blisterpackungen 4, 6 nach dem Stanzvorgang weiter transportiert, bis sie von der Übergabeeinheit 14 ergriffen werden. Ein solches Transportmittel bewegt sich vorzugsweise getaktet und in Transferrichtung T.

Das Fördermittel 16 bewegt sich vorzugsweise in Transferrichtung T. Das Fördermittel 16 kann als eine umlaufende Packgutkette ausgebildet sein, die kontinuierlich oder vorzugsweise getaktet bewegt wird. Ebenso ist es denkbar, dass das Fördermittel 16 als ein Linearmotorsystem ausgebildet ist. Wenn das Fördermittel 16 getaktet bewegt wird oder wenn die einzelnen Schlitten des umlaufenden Linearmotorsystems an der Position, an der ihnen die Blisterpackungen 4, 6 zugeführt werden, während der Übergabe stillstehen, können in den Fächern des Fördermittels 16 Stapel von zwei oder mehr aufeinander liegenden Blisterpackungen 4, 6 gebildet werden. Es ist auch denkbar, die Blisterpackungen 4, 6 nicht direkt an das Fördermittel 16, sondern zunächst an einen Speicher (nicht dargestellt) zu übergeben.

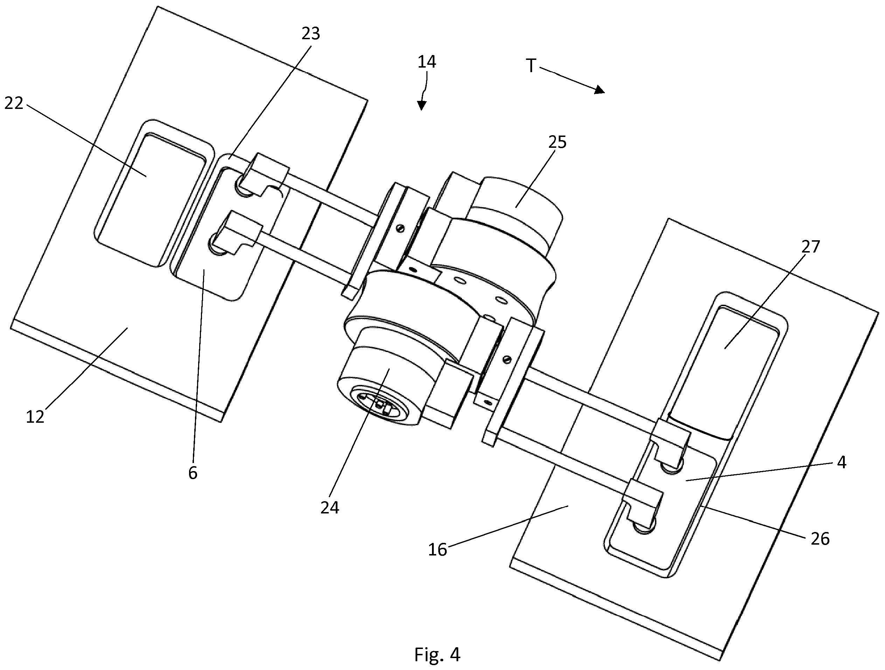

Die erfindungsgemäße Übergabeeinheit 14 weist einen ersten Transferarm 24 und einen zweiten Transferarm 25 auf, die zu beiden Seiten der Längsmittelebene L der Übergabeeinheit 14 angeordnet sind. Der erste Transferarm 24 ist bewegbar zwischen einer Aufnahmestellung (siehe Fig. 2) zum Aufnehmen der ersten Blisterpackung 4 von einer ersten Aufnahmeposition 22 und einer Abgabestellung (Fig. 4) zum Ablegen der ersten Blisterpackung 4 in einer ersten Abgabeposition 26.

Der zweite Transferarm 25 der Übergabeeinheit 14 ist bewegbar zwischen einer Aufnahmestellung (Fig. 4) zum Aufnehmen der zweiten Blisterpackung 6 von einer zweiten Aufnahmeposition 23 und einer Abgabestellung (siehe Fig. 2) zum Ablegen der zweiten Blisterpackung 6 in einer zweiten Abgabeposition 27. Die beiden Abgabepositionen 26, 27 sind quer zur Längsmittelebene L in einer Reihe nebeneinander angeordnet und jeweils seitlich versetzt zur Längsmittelebene L.

Die beiden Transferarme 24, 25 sind im Wesentlichen spiegelsymmetrisch bezüglich der Längsmittelebene L der Vorrichtung 2 angeordnet und aufgebaut. Allerdings sind die beiden Transferarme 24, 25 in Längsrichtung um einen Abstand d zueinander versetzt, und der zweite Transferarm 25 ist kürzer als der erste Transferarm 24. Genaueres hierzu folgt weiter unten unter Bezugnahme auf Fig. 2.

Die beiden Transferarme 24, 25 führen gegenläufige hin- und hergehende Schwenkbewegungen aus. Wenn der erste Transferarm 24 sich in der Aufnahmestellung befindet, befindet sich der zweite Transferarm 25 in seiner Abgabestellung oder zumindest in der Nähe der Abgabestellung. Wenn sich der erste Transferarm 24 in der Abgabestellung befindet, befindet sich der zweite Transferarm 25 in seiner Aufnahmestellung oder zumindest in der Nähe der Aufnahmestellung. Die Aufnahmestellung des ersten Transferarms 24 unterscheidet sich räumlich von der Aufnahmestellung des zweiten Transferarms 25. Ebenso unterscheidet sich die Abgabestellung des ersten Transferarms 24 von der Abgabestellung des zweiten Transferarms 25.

Die erste und zweite Aufnahmeposition 22, 23 und die ersten und zweite Abgabeposition 26, 27 sind jeweils vorzugsweise in der Form der zu übergebenden Blisterpackungen 4, 6 ausgebildet. Bei herkömmlichen Blisterpackungen 4, 6 werden die genannten Positionen somit im Wesentlichen eine rechteckförmige Gestalt aufweisen. In der dargestellten Ausführungsform sind die oben genannten Positionen jeweils derart angeordnet, dass sich die längere Seite der Positionen quer zur Transferrichtung T erstreckt. Wie aus Fig. 2 ersichtlich ist, sind die erste und zweite Aufnahmeposition 22, 23 im Bereich der Längsmittelebene L angeordnet. Hingegen sind die erste und zweite Abgabeposition 26, 27 bezüglich der Längsmittelebene L nach außen versetzt angeordnet, vorzugsweise in einer bezüglich der Längsmittelebene L symmetrischen Anordnung.

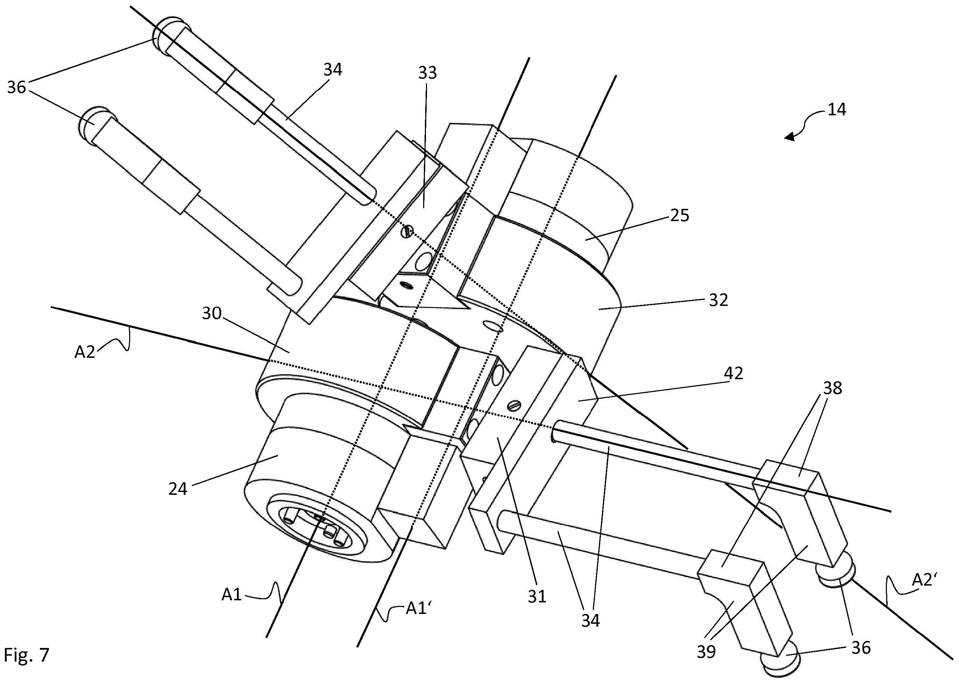

Bezug nehmend auf Fig. 7 bis 10 werden nun Details der Übergabeeinheit 14 näher beschrieben. Wie aus Fig. 7 hervorgeht, weist der erste Transferarm 24 ein erstes Segment 30 und ein zweites Segment 31 auf. Das erste Segment 30 des ersten Transferarms 24 ist um eine erste Achse A1, die senkrecht zur Längsmittelebene L verläuft, drehbar befestigt. Das erste Segment des ersten Transferarms 24 weist einen Abschnitt auf, an dem das zweite Segment 31 drehbar um eine zur ersten Achse A1 im Wesentlichen senkrecht verlaufende ortsveränderliche zweite Achse A2 befestigt ist. An dem zweiten Segment 31 ist ein Halteorgan 34 zum Aufnehmen und Halten der Blisterpackung 4 angeordnet.

Der zweite Transferarm 25 weist ebenfalls ein erstes Segment 32 und ein zweites Segment 33 auf. Das erste Segment 32 des zweiten Transferarms 25 ist um die erste Achse A1' drehbar befestigt. Das erste Segment 32 des zweiten Transferarms 25 weist außerdem einen Abschnitt auf, an dem das zweite Segment 33 drehbar um eine weitere zur ersten Achse A1' im Wesentlichen senkrecht verlaufende ortsveränderliche zweite Achse A2' befestigt ist. An dem zweiten Segment 33 ist ebenfalls ein Halteorgan 34 zum Aufnehmen und Halten einer Blisterpackung 6 angeordnet.

Die Transferarme 24, 25 sind derart ausgestaltet und angesteuert, dass die Bewegung der Transferarme 24, 25 von ihrer jeweiligen Aufnahmestellung zu ihrer jeweiligen Abgabestellung und zurück eine kombinierte Bewegung ist, die sich zumindest aus einer ersten Drehbewegung des ersten Segments 30, 32 und des zweiten Segments 31, 33 um die erste Achse A1, A1' und einer zweiten Drehbewegung des zweiten Segments 31, 33 um die jeweils zugehörige zweite Achse A2, A2' zusammensetzt.

Wie aus Fig. 2 hervorgeht, ist die zweite Achse A2 des ersten Transferarms 24 derart angeordnet, dass sie sich während der ersten Drehbewegung um die erste Achse A1 in einer ersten Ebene E1 bewegt, die die erste Aufnahmeposition 22 oder deren seitliche Projektion in einer ersten geraden Linie L1 schneidet. Diese erste gerade Linie L1 ist seitlich versetzt zur Mitte M1 der ersten Aufnahmeposition 22 angeordnet. Der seitliche Versatz dieser ersten geraden Linie L1 erfolgt ausgehend von der Mitte M1 der ersten Aufnahmeposition 22 in Richtung nach außen.

Außerdem schneidet die Ebene E1 die erste Abgabeposition 26 oder deren seitliche Projektion in einer geraden Linie L1'. Diese gerade Linie L1' ist seitlich versetzt zur Mitte der ersten Abgabeposition 26 angeordnet.

Die zweite Achse A2' des zweiten Transferarms 25 ist derart angeordnet, dass sie sich während der ersten Drehbewegung des zweiten Transferarms 25 um die erste Achse A1' in einer zweiten Ebene E2 bewegt, die die zweite Aufnahmeposition 23 oder deren seitliche Projektion in einer zweiten geraden Linie L2 schneidet, die seitlich versetzt zur Mitte M2 der zweiten Aufnahmeposition 23 ist. Auch hier ist der seitliche Versatz, ausgehend von der Mitte M2 der zweiten Aufnahmeposition 23, nach außen gerichtet.

Außerdem schneidet die Ebene E2 die zweite Abgabeposition 27 oder deren seitliche Projektion in einer geraden Linie L2'. Diese gerade Linie L2' ist seitlich versetzt zur Mitte der zweiten Abgabeposition 27 angeordnet.

Bezug nehmend auf Fig. 7 umfasst das Halteorgan 34 jedes Transferarms 24, 25 mehrere Halteköpfe 36, die mittels eines Trägerarms 38 am zweiten Segment 31, 33 befestigt sind. Es ist auch möglich, dass lediglich ein Haltekopf 36 je Halteorgan 34 vorhanden ist. Bei Vorliegen von mehreren Halteköpfen 36 können auch mehrere separate Trägerarme 38 zur Verbindung mit dem zweiten Segment 31, 33 vorliegen. In der dargestellten Ausführungsform ist der Trägerarm 38 rechenförmig ausgebildet und umfasst mehrere Finger 39, an deren Spitze jeweils ein Haltekopf 36 angeordnet ist. Der Trägerarm 38 ist vorzugsweise starr am zweiten Segment 31, 33 befestigt. In der dargestellten Ausführungsform weist der Trägerarm 38 ein Verbindungsglied 42 auf, das mit dem zweiten Segment 31, 33 verbunden ist. In der dargestellten Ausführungsform ist das Verbindungsglied 42 des Trägerarms 38 senkrecht mit dem zweiten Segment 31, 33 verbunden. Ebenso ist es denkbar, dass das Verbindungsglied 42 und somit der Trägerarm 38 schräg vom zweiten Segment 31, 33 abragt. In der jeweiligen Aufnahmestellung und Abgabestellung der Transferarme 24, 25 ragt der Trägerarm 38 dann jeweils schräg nach unten ab. Auf diese Weise könnte der Winkel, den der jeweilige Transferarm 24, 25 um die erste Achse A1, A1' zurücklegen muss, reduziert werden.

Wie aus Fig. 2 und 7 hervorgeht, ist das zweite Segment 31, 33 des ersten oder zweiten Transferarms 24, 25 in der jeweiligen Aufnahmestellung bezüglich der Längsmittelebene L nach innen geschwenkt. Konkret ist der Abschnitt des zweiten Segments 31, 33 nach innen geschwenkt, an dem der Trägerarm 38 befestigt ist. Ebenso ist erkennbar, dass das zweite Segment 31, 33 des ersten oder zweiten Transferarms 24, 25, konkret derjenige Abschnitt des zweiten Segments 31, 33, an dem der Trägerarm 38 befestigt ist, in der jeweiligen Abgabestellung bezüglich der Längsmittelebene L nach außen geschwenkt ist.

Die erste Aufnahmeposition 22 ist in Längsrichtung weiter von der ersten und zweiten Abgabeposition 26, 27 entfernt als die zweite Aufnahmeposition 23. Wie aus Fig. 2 hervorgeht, sind die ersten Achsen A1, A1' des ersten und zweiten Transferarms 24, 25 parallel zueinander, aber in Längsrichtung in einem Abstand d zueinander angeordnet. Dieser Abstand d ist in der dargestellten Ausführungsform die Hälfte des Längsversatzes zwischen den Aufnahmepositionen 22 und 23.

Die erste Achse A1 des ersten Transferarms 24 ist in Längsrichtung in der Mitte zwischen der ersten Aufnahmeposition 22 und der ersten Abgabeposition 26 angeordnet, und die erste Achse A1' des zweiten Transferarms 25 ist in Längsrichtung in der Mitte zwischen der zweiten Aufnahmeposition 23 und der zweiten Abgabeposition 27 angeordnet.

Dementsprechend ist der Abstand I₁ des mindestens einen Haltekopfs 36 des ersten Transferarms 24 zur ersten Achse A1 des ersten Transferarms 24 größer als der Abstand I₂ des mindestens einen Haltekopfs 36 des zweiten Transferarms 25 zur ersten Achse A1' des zweiten Transferarms 25.

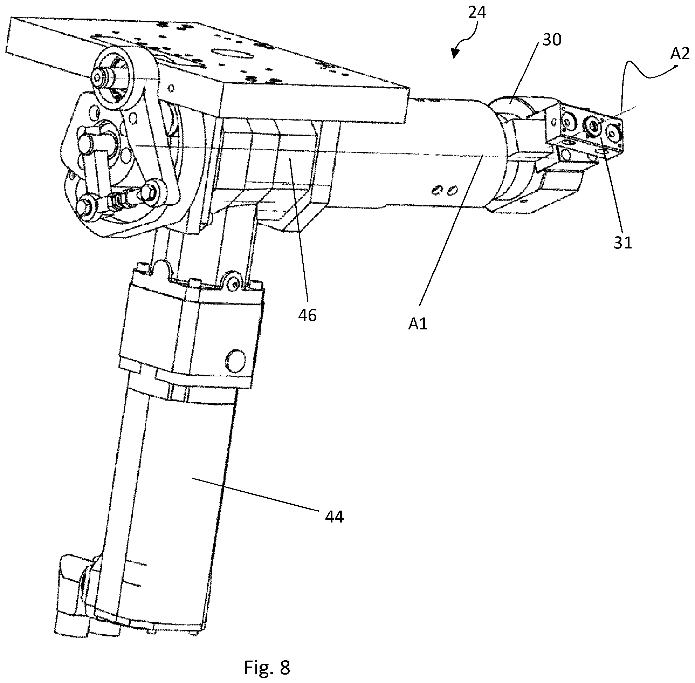

Bezug nehmend auf Fig. 8 bis 10 werden nun Details eines möglichen Antriebs für den Transferarm 24 beschrieben.

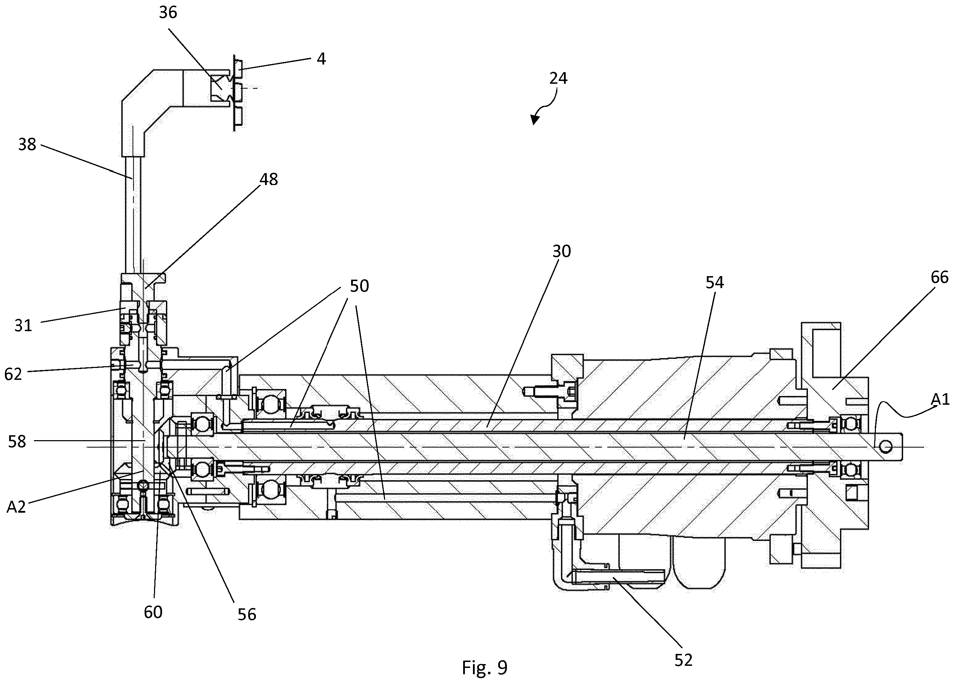

In Fig. 8 ist ein Motor 44 erkennbar, der über ein Getriebe 46 das erste Segment 30 um die erste Achse A1 hin- und zurückschwenkt. Das um die zweite Achse A2 schwenkbare zweite Segment 31 ist ohne das daran befestigte Halteorgan 34 dargestellt. Das Halteorgan 34 ist vorzugsweise ein Formatteil, das je nach Art und Größe der zu übergebenden Blisterpackungen 4, 6 ausgetauscht werden kann. Zur lösbaren Befestigung des Trägerarms 38 des Halteorgans 34 am zweiten Segment 31 ist vorzugsweise eine Rändelschraube 48 (siehe Fig. 9) vorgesehen. Zur weiteren Anpassung an unterschiedliche Formate können die Transferarme 24, 25 auch parallel zur ersten Achse A1 verschiebbar gelagert sein, und/oder in Längsrichtung verschiebbar sein.

In der Querschnittsansicht nach Fig. 9 sind der Motor 44 und das Getriebe 46 nicht dargestellt. Vom Motor 44 wird das erste Segment 30 des Transferarms 24, das als Hohlwelle ausgebildet ist, angetrieben. Bei Betätigung des Motors 44 wird das erste Segment 30 um die erste Achse A1 hin- und hergeschwenkt. Das zweite Segment 31 ist in einem Abschnitt des ersten Segments 30 um die zweite Achse A2 drehbar gelagert. Im ersten Segment 30 sind Luftkanäle 50 enthalten, die mit einem Vakuumanschluss 52 für die Halteköpfe 36 verbunden sind. Im Inneren des ersten Segments 30 ist zudem eine Welle 54 angeordnet, an deren einem Ende, das dem zweiten Segment 31 zugewandt ist, ein Kegelrad 56 starr befestigt ist.

Das zweite Segment 31 umfasst eine zentrale Welle 58, die drehbar in dem Endabschnitt des ersten Segments 30 gelagert ist und sich bei einer Drehbewegung des ersten Segments 30 um die erste Achse A1 mit dem ersten Segment 30 mitdreht. Fest mit der Welle 58 ist ein weiteres Kegelrad 60 verbunden, das bei einer Drehbewegung des ersten und zweiten Segments 30, 31 um die erste Achse A1 mit dem Kegelrad 56 kämmt. Eine Ringnut 62 in der Welle 58 dient zur Herstellung einer Verbindung mit den Luftkanälen 50 im ersten Segment 30 auch während einer Drehbewegung des zweiten Segments 31 um die zweite Achse A2.

Wenn nun das erste Segment 30 und somit auch das zweite Segment 31 um die erste Achse A1 verschwenkt werden, läuft das Kegelrad 60 am unbewegten Kegelrad 56 ab und versetzt somit die Welle 58 in eine Drehbewegung um die zweite Achse A2. Bei einer Übersetzung von 1:1 zwischen den Kegelrädern 56, 60 bringt somit eine Schwenkung des ersten Segments 30 und des zweiten Segments 31 um die erste Achse A1 um 180°, wie sie bei den in Fig. 1 bis 6 dargestellten Übergabeprozessen gewünscht ist, ebenfalls eine Drehung des zweiten Segments 31 um die zweite Achse A2 um 180° mit sich. Somit führt das zweite Segment 31 und die an dem Halteorgan 34 gehaltene Blisterpackung 4 eine Drehbewegung um die zweite Achse A2 von im Wesentlichen 180° aus, wenn sich der Transferarm 24 von seiner Aufnahmestellung zu seiner Abgabestellung oder umgekehrt bewegt. Wenn das Halteorgan 34 in der Aufnahmestellung und der Abgabestellung schräg nach unten abragt, kann das erste Segment 30 bei der Schwenkbewegung um die erste Achse A1 auch nur einen Winkelbereich von weniger als 180°, bis hin zu 120°, überstreichen. In diesem Fall müsste die Übersetzung zwischen den Kegelrädern 56, 60 entsprechend angepasst werden, weil das zweite Segment 31 in jedem Fall eine Drehbewegung um die zweite Achse A2 um 180° vollziehen muss.

Die Drehbewegung des zweiten Segments 31 um die zweite Achse A2 in Kombination mit der Schwenkbewegung um die erste Achse A1 bewirkt, dass die jeweilige Blisterpackung 4 von dem Haltekopf 36 an einer Seite, vorzugsweise an der ebenen Fläche der Deckfolienseite, ergriffen und anschließend von oben in die Abgabeposition 26 abgelegt werden kann. Dabei vollzieht die Blisterpackung 4 eine 180°-Drehung um ihren Mittelpunkt.

Abweichend vom bisher dargestellten Grundprinzip ist es gewünscht, dass das zweite Segment 31 in den Endbereichen der Schwenkbewegung um die erste Achse A1 keine Drehbewegung um die zweite Achse A2 vollzieht. Dies ist darin begründet, dass für ein gezieltes Aufnehmen und Ablegen der Blisterpackungen 4 ein geradliniges Anheben und Absenken der Blisterpackungen 4 in den Endbereichen der Bewegung vorteilhaft ist. Zur Erreichung dieses Zwecks kann in der zweiten Übergabeeinheit 14 ein Mechanismus 64 zur Anpassung des Drehverlaufs des zweiten Segments 31 um die zweite Achse A2 vorgesehen sein.

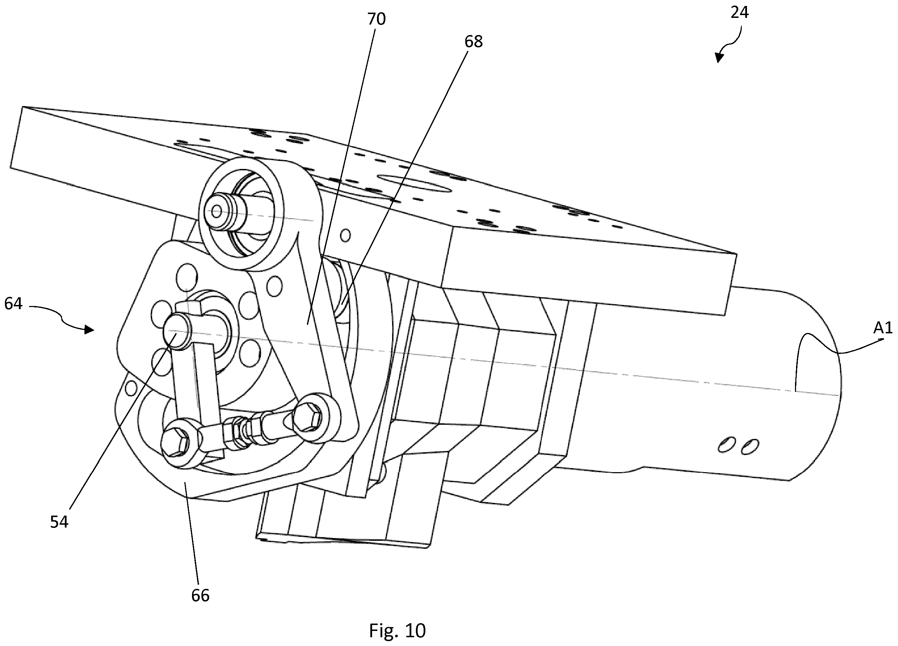

Dieser Mechanismus 64 wird nun unter Bezugnahme auf Fig. 10 näher beschrieben. In Fig. 10 ist das Ende des ersten Segments 30, an dem das zweite Segment 31 sowie das Halteorgan 34 befestigt sind, aus Zwecken der Übersichtlichkeit nicht dargestellt. Der Mechanismus 64 umfasst eine Kurvenscheibe 66, die gemeinsam mit dem ersten Segment 30 um die erste Achse A1 gedreht wird. In der Querschnittsansicht in Fig. 9 ist diese Kurvenscheibe 66 ebenfalls gezeigt, allerdings ohne die weiteren Komponenten des Mechanismus 64.

Wieder Bezug nehmend auf Fig. 10 umfasst der Mechanismus 64 des Weiteren eine Kurvenrolle 68, die drehbar an einem Hebelmechanismus 70 angelenkt ist. Der Hebelmechanismus 70 wiederum ist mit der inneren Welle 54 starr verbunden, an deren anderem Ende das Kegelrad 56 angeordnet ist. Bei Drehung der Kurvenscheibe 66 um die erste Achse A1 läuft die Kurvenrolle 68 an der Kurvenscheibe 66 ab und bewirkt somit eine entsprechende Auslenkung des Hebelmechanismus 70, was wiederum zu einer Drehung der Welle 54 um die erste Achse A1 führt. Der Mechanismus 64 ist so gestaltet, dass sich die Welle 54 und somit das Kegelrad 56 in den Anfangs- und Endbereichen der Drehbewegung des ersten Segments 30 und somit der Kurvenscheibe 66 um die erste Achse A1 mit derselben Winkelgeschwindigkeit wie das erste Segment 30 mitbewegen. Auf diese Weise erfolgt zwischen Kegelrad 56 und Kegelrad 60 keine Relativbewegung, sodass auch keine Drehbewegung des zweiten Segments 31 um die zweite Achse A2 initiiert wird.

Im weiteren Verlauf der Schwenkbewegung um die erste Achse A1 hingegen wird durch den Mechanismus 64 eine gegenläufige Bewegung der Welle 54 entgegen der Drehrichtung des ersten Segments 30 bewirkt, wodurch die Drehgeschwindigkeit des zweiten Segments 31 um die zweite Achse A2 bereichsweise schneller ist als die Drehbewegung um die erste Achse A1. Auf diese Weise gelingt es, an den Endpunkten der Schwenkbewegung um die erste Achse A1 die Drehbewegung des zweiten Segments 31 um die zweite Achse A2 auszusetzen und dies in einem Mittelbereich der Schwenkbewegung um die erste Achse A1 durch schnellere Drehung des zweiten Segments 31 um die zweite Achse A2 wieder auszugleichen. Dadurch wird gewährleistet, dass die Blisterpackungen 4 immer eine Drehbewegung um die zweite Achse A2 um 180° vollziehen.

Selbstverständlich existieren vielfältige Modifikationen der bislang beschriebenen Struktur des Transferarms 24 und des zugehörigen Antriebs. So kann beispielsweise die Kopplung zwischen der Schwenkbewegung des ersten Segments 30 um die erste Achse A1 und der Drehbewegung des zweiten Segments 31 um die zweite Achse A2 auch mittels anderer mechanischer Komponenten gelöst werden. Außerdem ist es denkbar, zwei separate Servomotoren für den Antrieb des ersten Segments 30 und des zweiten Segments 31 vorzusehen.

Der Aufbau des Transferarms 25 ist im Wesentlichen spiegelsymmetrisch zum Transferarm 24, wobei das erste Segment mit 32, das zweite Segment mit 33, die erste Achse mit A1' und die zweite Achse mit A2' bezeichnet sind.

Bezugnehmend auf Fig. 1 bis 6 soll nun der Ablauf eines Übergabeprozesses mit der beschriebenen Übergabeeinheit 14 näher erläutert werden.

Die in der ersten Aufnahmeposition 22 befindliche Blisterpackung 4 wird von dem ersten Transferarm 24 ergriffen und zur ersten Abgabeposition 26 transferiert. Die erste Blisterpackung 4 wird in der ersten Aufnahmeposition 22 von oben aufgenommen und ebenfalls von oben in der ersten Abgabeposition 26 abgelegt. Die erste Blisterpackung 4 ist dabei in der ersten Aufnahmeposition 22 im Bereich der Längsmittelebene L angeordnet und in der ersten Abgabeposition 26 bezüglich der Längsmittelebene L nach außen versetzt angeordnet. Die erste Blisterpackung 4 wird in der ersten Abgabeposition 26 im Vergleich zur ersten Aufnahmeposition 22 mit derselben Seite nach oben, aber um 180° um ihren Mittelpunkt gedreht abgelegt.

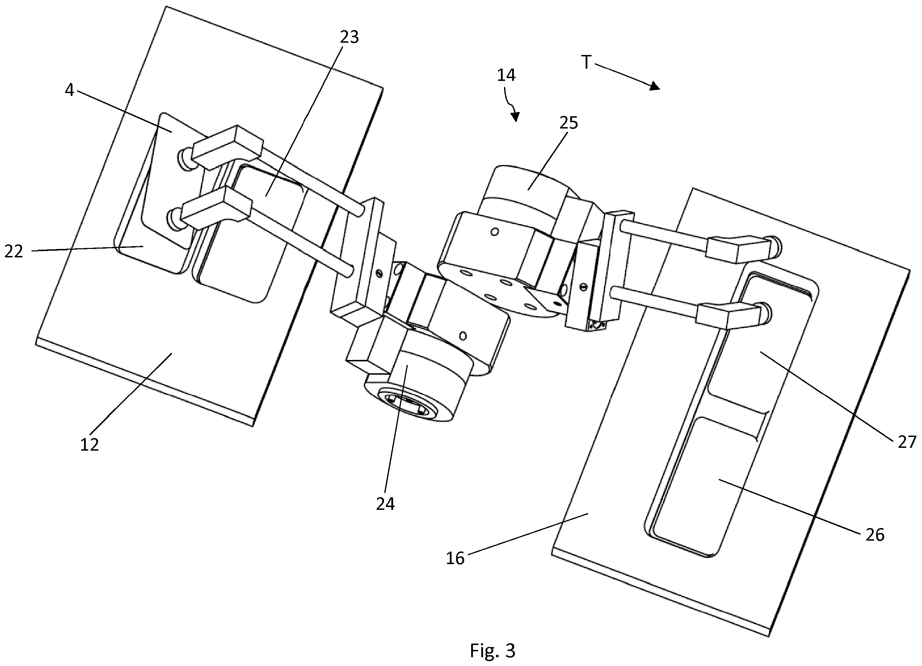

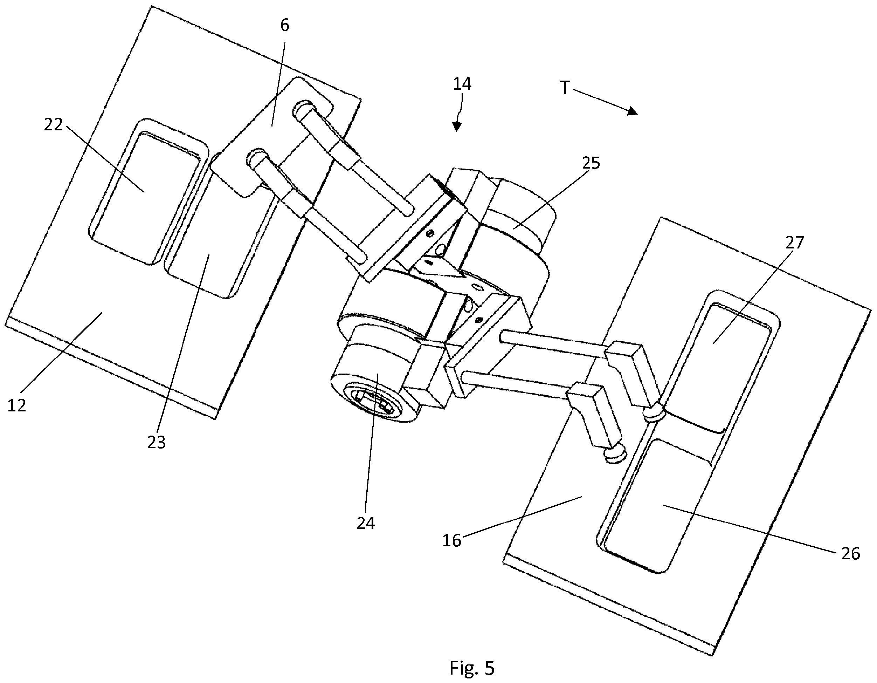

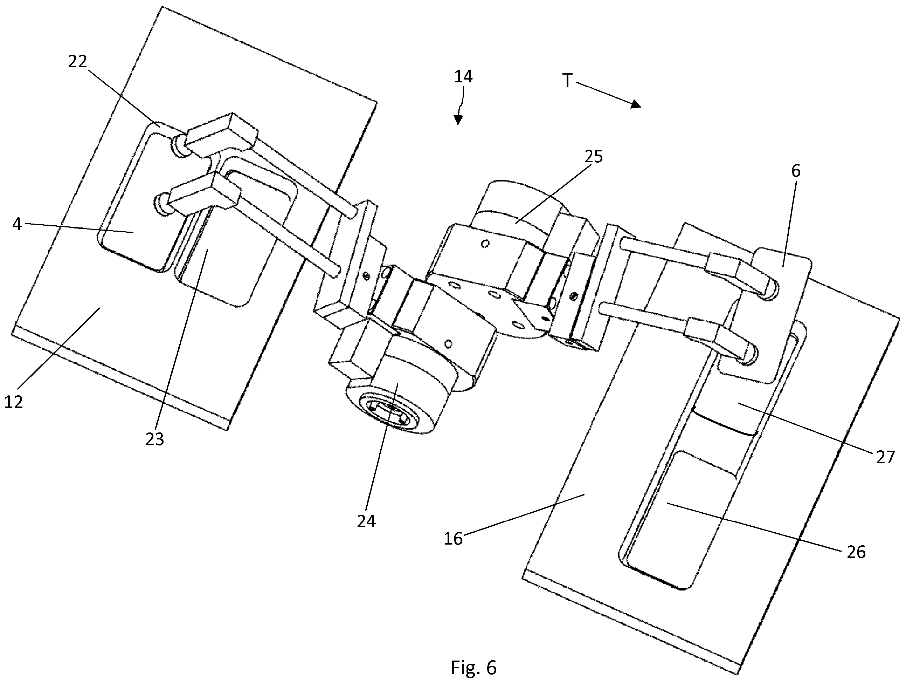

Fig. 1 zeigt die erste Blisterpackung 4 bei deren Ergreifen an der ersten Aufnahmeposition 22. In Fig. 3 befindet sich die erste Blisterpackung 4 auf dem Weg von der ersten Aufnahmeposition 22 zur ersten Abgabeposition 26, wo sie an dem in Fig. 4 dargestellten Zeitpunkt abgelegt wird. In Fig. 5 ist der erste Transferarm 24 kurz nach dem Ablegevorgang dargestellt, während er sich bereits wieder auf dem Rückweg in seine Aufnahmestellung befindet. Kurz nach dem in Fig. 6 dargestellten Zeitpunkt beginnt der Zyklus wieder von vorne. Der Vorgang wird so oft wiederholt wie gewünscht.

Für die Übergabe der zweiten Blisterpackung 6 aus der zweiten Aufnahmeposition 23 hin zur zweiten Abgabeposition 27 mittels des zweiten Transferarms 25 gelten exakt dieselben Aussagen wie für die Übergabe der ersten Blisterpackung 4 mittels des ersten Transferarms 24. Lediglich die Zeitpunkte des Aufnehmens der Blisterpackung 6 und des Ablegens der Blisterpackung 6 sind im Wesentlichen gegenläufig zu den Zeitpunkten, an denen die erste Blisterpackung 4 aufgenommen und abgelegt wird. Die beiden Transferarme 24, 25 vollziehen eine Schwenkbewegung in derselben Drehrichtung um unterschiedliche erste Achsen A1, A1', während die Drehbewegungen ihrer zweiten Segmente 31, 33 um die jeweilige zweite Achse A2, A2' zueinander entgegengesetzte Drehrichtungen zeigen. An einem Scheitelpunkt der Drehbewegung, wie sie im Querschnitt in Fig. 9 dargestellt ist, sind die Blisterpackungen vorzugsweise parallel zur Längsmittelebene L angeordnet.

Aufgrund der kombinierten Drehbewegungen um die zwei zueinander senkrechten Achsen werden die Blisterpackungen 4, 6 in den Abgabepositionen 26, 27 im Vergleich zu den Aufnahmepositionen 22, 23 mit derselben Seite nach oben, aber um 180° um ihre Mittelpunkte gedreht abgelegt. Gegebenenfalls ist es auch möglich, dass die Blisterpackungen 4, 6 nicht in einer horizontalen Ausrichtung an den Aufnahmepositionen 22, 23 liegen, sondern beispielsweise in einer senkrechten Ausrichtung oder unter einem schrägen Winkel zur Vertikalen bereitgestellt werden. In diesem Fall vollziehen die Transferarme 24, 25 eine Schwenkbewegung um die jeweilige erste Achse lediglich über einen Winkel, der kleiner als 180° ist, in der Regel zwischen 60° und 180°.

Die Blisterpackungen 4, 6 sind meist mit einer ebenen Deckfolie verschlossen, an der die Halteköpfe 36 angreifen können. In diesem Fall können sie bevorzugt als Saugköpfe ausgestaltet sein. Es ist aber auch denkbar, dass die Blisterpackungen 4, 6 nach oben offen bleiben. In diesem Fall ist es vorteilhaft, wenn die Saugköpfe 36 an die Form der Produkte angepasst werden und direkt an den in den Blisternäpfen fixierten Produkten angreifen.

Alternativ können auch Greifköpfe mit Greifern als Halteköpfe verwendet werden. Dies ist besonders bei schwereren Produkten oder bei nach oben offenen Blisterpackungen 4, 6 eine sinnvolle Option. In diesem Fall kann die Luftzufuhr zu den Halteköpfen 36 entfallen, wie sie unter Bezugnahme auf Fig. 9 beschrieben wurde.

Neben der beschriebenen Ausgestaltung ist es auch denkbar, dass die Übergabeeinheit 14 einen umgekehrten Prozess durchläuft, d.h. die Blisterpackungen 4, 6 an den Positionen 26, 27 aufgenommen und zu den Positionen 22, 23 transportiert werden.

## Patentansprüche

1. Übergabeeinheit (14) zum Transferieren von Blisterpackungen (4, 6) mit
einem ersten Transferarm (24), der bewegbar ist zwischen einer ersten Aufnahmestellung zum Aufnehmen einer ersten Blisterpackung (4) von einer ersten Aufnahmeposition (22) und einer ersten Abgabestellung zum Ablegen der ersten Blisterpackung (4) in einer ersten Abgabeposition (26), und
einem zweiten Transferarm (25), der bewegbar ist zwischen einer zweiten Aufnahmestellung zum Aufnehmen einer zweiten Blisterpackung (6) von einer zweiten Aufnahmeposition (23) und einer zweiten Abgabestellung zum Ablegen der zweiten Blisterpackung (6) in einer zweiten Abgabeposition (27),
wobei der erste und der zweite Transferarm (24, 25) zu beiden Seiten einer Längsmittelebene (L) der Übergabeeinheit (14) angeordnet sind,
wobei jeder Transferarm (24, 25) ein erstes Segment (30, 32) und ein zweites Segment (31, 33) aufweist, wobei das erste Segment (30, 32) jedes Transferarms (24, 25) um eine zugehörige erste Achse (A1, A1'), die senkrecht zur Längsmittelebene (L) verläuft, drehbar befestigt ist,
wobei das erste Segment (30, 32) jedes Transferarms (24, 25) einen Abschnitt aufweist, an dem das zweite Segment (31, 33) drehbar um eine zur zugehörigen ersten Achse (A1, A1') im Wesentlichen senkrecht verlaufende ortsveränderliche zweite Achse (A2, A2') befestigt ist, wobei an dem zweiten Segment (31, 33) ein Halteorgan (34) zum Aufnehmen und Halten einer Blisterpackung (4, 6) angeordnet ist,
wobei die Transferarme (24, 25) derart ausgestaltet und angesteuert sind, dass die Bewegung der Transferarme (24, 25) von der ersten oder zweiten Aufnahmestellung zur ersten oder zweiten Abgabestellung und zurück eine kombinierte Bewegung ist, die sich zumindest aus einer ersten Drehbewegung des ersten Segments (30, 32) und des zweiten Segments (31, 33) um die erste Achse (A1, A1') und einer zweiten Drehbewegung des zweiten Segments (31, 33) um die zweite Achse (A2, A2') zusammensetzt,
wobei die erste und zweite Aufnahmeposition (22, 23) im Bereich der Längsmittelebene (L) in einer Längsreihe hintereinander angeordnet sind und die erste und zweite Abgabeposition (26, 27) bezüglich der Längsmittelebene (L) nach außen versetzt angeordnet sind,
wobei die zweite Achse (A2) des ersten Transferarms (24) derart angeordnet ist, dass sich die zweite Achse (A2) des ersten Transferarms (24) während der ersten Drehbewegung des ersten Segments (30) des ersten Transferarms (24) in einer ersten Ebene (E1) bewegt, die die erste Aufnahmeposition (22) oder deren seitliche Projektion in einer ersten geraden Linie (L1) schneidet, die seitlich versetzt zur Mitte (M1) der ersten Aufnahmeposition (22) ist, und
wobei die zweite Achse (A2') des zweiten Transferarms (25) derart angeordnet ist, dass sich die zweite Achse (A2') des zweiten Transferarms (25) während der ersten Drehbewegung des ersten Segments (32) des zweiten Transferarms (25) in einer zweiten Ebene (E2) bewegt, die die zweite Aufnahmeposition (23) oder deren seitliche Projektion in einer zweiten geraden Linie (L2) schneidet, die seitlich versetzt zur Mitte (M2) der zweiten Aufnahmeposition (23) ist.

2. Übergabeeinheit (14) nach Anspruch 1, **dadurch gekennzeichnet, dass** die ersten Achsen (A1, A1') des ersten und zweiten Transferarms (24, 25) parallel zueinander, aber in Längsrichtung in einem Abstand (d) zueinander angeordnet sind.

3. Übergabeeinheit (14) nach Anspruch 1 oder 2, **dadurch gekennzeichnet, dass** das Halteorgan (34) jedes Transferarms (24, 25) mindestens einen Haltekopf (36) umfasst, und dass der Abstand (I₁) des mindestens einen Haltekopfs (36) des ersten Transferarms (24) zur ersten Achse (A1) des ersten Transferarms (24) größer ist als der Abstand (I₂) des mindestens einen Haltekopfs (36) des zweiten Transferarms (25) zur ersten Achse (A1') des zweiten Transferarms (25).

4. Übergabeeinheit (14) nach einem der vorhergehenden Ansprüche, **dadurch gekennzeichnet, dass** die erste Aufnahmeposition (22) in Längsrichtung weiter von der ersten und zweiten Abgabeposition (26, 27) entfernt ist als die zweite Aufnahmeposition (23), wobei die erste Achse (A1) des ersten Transferarms (24) in Längsrichtung in der Mitte zwischen der ersten Aufnahmeposition (22) und der ersten Abgabeposition (26) angeordnet ist, und wobei die erste Achse (A1') des zweiten Transferarms (25) in Längsrichtung in der Mitte zwischen der zweiten Aufnahmeposition (23) und der zweiten Abgabeposition (27) angeordnet ist.

5. Übergabeeinheit (14) nach einem der vorangehenden Ansprüche, **dadurch gekennzeichnet, dass** die Transferarme (24, 25) derart ausgestaltet und angesteuert sind, dass die Blisterpackungen (4, 6) an der ersten und zweiten Aufnahmeposition (22, 23) von den Halteorganen (34) des ersten und zweiten Transferarms (24, 25) von oben aufgenommen und ebenfalls von oben in die Abgabepositionen (26, 27) abgelegt werden.

6. Übergabeeinheit (14) nach einem der vorangehenden Ansprüche, **dadurch gekennzeichnet, dass** das zweite Segment (31, 33) des ersten oder zweiten Transferarms (24, 25) in der ersten oder zweiten Aufnahmestellung jeweils bezüglich der Längsmittelebene (L) nach innen geschwenkt ist, und dass das zweite Segment (31, 33) des ersten oder zweiten Transferarms (24, 25) in der ersten oder zweiten Abgabestellung jeweils bezüglich der Längsmittelebene (L) nach außen geschwenkt ist.

7. Übergabeeinheit (14) nach einem der vorhergehenden Ansprüche, **dadurch gekennzeichnet, dass** die zweiten Segmente (31, 33) und somit die an den Halteorganen (34) gehaltenen Blisterpackungen (4, 6) eine Drehbewegung um die jeweilige zweite Achse (A2, A2') von im Wesentlichen 180° ausführen, wenn sich die Transferarme (24, 25) von der ersten oder zweiten Aufnahmestellung zur ersten oder zweiten Abgabestellung oder umgekehrt bewegen.

8. Übergabeeinheit (14) nach einem der vorhergehenden Ansprüche, **dadurch gekennzeichnet, dass** die ersten Segmente (30, 32) eine Drehbewegung um die zugehörige erste Achse (A1, A1') von 60° bis 180°, bevorzugt 120° bis 180° ausführen, wenn sich die Transferarme (24, 25) von der ersten oder zweiten Aufnahmestellung zur ersten oder zweiten Abgabestellung oder umgekehrt bewegen.

9. Übergabeeinheit (14) nach einem der vorhergehenden Ansprüche, **dadurch gekennzeichnet, dass** der erste und zweite Transferarm (24, 25) derart angesteuert sind, dass der erste und zweite Transferarm (24, 25) gegenläufige hin- und hergehende Schwenkbewegungen ausführen.

10. Übergabeeinheit (14) nach einem der vorhergehenden Ansprüche, **dadurch gekennzeichnet, dass** die Transferarme (24, 25) parallel zur zugehörigen ersten Achse (A1; A1') verschiebbar gelagert sind.

11. Übergabeeinheit (14) nach einem der vorhergehenden Ansprüche, **dadurch gekennzeichnet, dass** das Halteorgan (34) jedes Transferarms (24, 25) mindestens einen Haltekopf (36) umfasst, der mittels mindestens eines Trägerarms (38) am zweiten Segment (31, 33) befestigt ist.

12. Übergabeeinheit (14) nach Anspruch 11, **dadurch gekennzeichnet, dass** der mindestens eine Trägerarm (38) starr an dem zweiten Segment (31, 33) befestigt ist.

13. Verfahren zum Transferieren von Blisterpackungen (4, 6) von einer ersten und zweiten Aufnahmeposition (22, 23) zu einer ersten und zweiten Abgabeposition (26, 27) mittels einer Übergabeeinheit (14), mit folgenden Schritten:
- Bereitstellen einer ersten und einer zweiten Blisterpackung (4, 6) in einer ersten und einer zweiten Aufnahmeposition (22, 23), wobei die Blisterpackungen (4, 6) in der ersten und zweiten Aufnahmeposition (22, 23) in einer Längsreihe, die parallel zu einer Längsmittelebene (L) der Übergabeeinheit (14) und im Bereich der Längsmittelebene (L) verläuft, hintereinander angeordnet sind;
- Aufnehmen der ersten Blisterpackung (4) in der ersten Aufnahmeposition (22), Bewegen der ersten Blisterpackung (4) und Ablegen der ersten Blisterpackung (4) in der ersten Abgabeposition (26), wobei die erste Blisterpackung (4) in der ersten Abgabeposition (26) von oben abgelegt wird, wobei die erste Blisterpackung (4) in der ersten Abgabeposition (26) bezüglich der Längsmittelebene (L) nach außen versetzt angeordnet ist, und wobei die erste Blisterpackung (4) in der ersten Abgabeposition (26) im Vergleich zur ersten Aufnahmeposition (22) um 180° um ihren Mittelpunkt gedreht abgelegt wird; und
- Aufnehmen der zweiten Blisterpackung (6) in der zweiten Aufnahmeposition (23), Bewegen der zweiten Blisterpackung (6) und Ablegen der zweiten Blisterpackung (6) in der zweiten Abgabeposition (27), wobei die zweite Blisterpackung (6) in der zweiten Abgabeposition (27) von oben abgelegt wird, wobei die zweite Blisterpackung (6) in der zweiten Abgabeposition (27) bezüglich der Längsmittelebene (L) nach außen versetzt angeordnet ist, und wobei die zweite Blisterpackung (6) in der zweiten Abgabeposition (27) im Vergleich zur zweiten Aufnahmeposition (23) um 180° um ihren Mittelpunkt gedreht abgelegt wird.

14. Verfahren nach Anspruch 13, **dadurch gekennzeichnet, dass** die Blisterpackungen (4, 6) an der ersten und zweiten Aufnahmeposition (22, 23) von oben aufgenommen werden, und dass die Blisterpackungen (4, 6) in der ersten und zweiten Aufnahmeposition (22, 23) und in der ersten und zweiten Abgabeposition (26, 27) jeweils mit derselben Seite nach oben angeordnet sind.

15. Verfahren nach Anspruch 13 oder 14, **dadurch gekennzeichnet, dass** die erste und zweite Blisterpackung (4, 6) während des Bewegens von der ersten und zweiten Aufnahmeposition (22, 23) zur ersten und zweiten Abgabeposition (26, 27) einen entgegengesetzten seitlichen Versatz quer zur Längsmittelebene (L) vollziehen.

## Claims

1. Transfer unit (14) for transferring blister packs (4, 6),
having a first transfer arm (24), which can be moved between a first receiving location for receiving a first blister pack (4) from a first receiving position (22) and a first discharging location for setting down the first blister pack (4) in a first discharging position (26), and
having a second transfer arm (25), which can be moved between a second receiving location for receiving a second blister pack (6) from a second receiving position (23) and a second discharging location for setting down the second blister pack (6) in a second discharging position (27),
wherein the first and the second transfer arms (24, 25) are arranged on either side of a longitudinal centre plane (L) of the transfer unit (14),
wherein each transfer arm (24, 25) has a first segment (30, 32) and a second segment (31, 33), wherein the first segment (30, 32) of each transfer arm (24, 25) is fastened such that it can be rotated about an associated first axis (A1, A1'), which runs perpendicularly in relation to the longitudinal centre plane (L),
wherein the first segment (30, 32) of each transfer arm (24, 25) has a portion on which the second segment (31, 33) is fastened such that it can be rotated about a second axis (A2, A2') which can be altered in location and runs essentially perpendicularly in relation to the associated first axis (A1, A1'), wherein a retaining device (34) for receiving and retaining a blister pack (4, 6) is arranged on the second segment (31, 33),
wherein the transfer arms (24, 25) are configured and activated such that the movement of the transfer arms (24, 25) from the first or second receiving location to the first or second discharging location, and back, is a combined movement which is made up at least of a first rotary movement of the first segment (30, 32) and of the second segment (31, 33) about the first axis (A1, A1') and of a second rotary movement of the second segment (31, 33) about the second axis (A2, A2'),
wherein the first and second receiving positions (22, 23) are arranged in a longitudinal row one behind the other in the region of the longitudinal centre plane (L) and the first and second discharging positions (26, 27) are arranged offset outwards in relation to the longitudinal centre plane (L),
wherein the second axis (A2) of the first transfer arm (24) is arranged such that, during the first rotary movement of the first segment (30) of the first transfer arm (24), the second axis (A2) of the first transfer arm (24) moves in a first plane (E1), which intersects the first receiving position (22) or the lateral projection thereof in a first straight line (L1), which is offset laterally in relation to the centre (M1) of the first receiving position (22), and
wherein the second axis (A2') of the second transfer arm (25) is arranged such that, during the first rotary movement of the first segment (32) of the second transfer arm (25), the second axis (A2') of the second transfer arm (25) moves in a second plane (E2), which intersects the second receiving position (23) or the lateral projection thereof in a second straight line (L2), which is offset laterally in relation to the centre (M2) of the second receiving position (23).

2. Transfer unit (14) according to Claim 1, **characterized in that** the first axes (A1, A1') of the first and second transfer arms (24, 25) are arranged parallel to one another, but at a distance (d) from one another in the longitudinal direction.

3. Transfer unit (14) according to Claim 1 or 2, **characterized in that** the retaining device (34) of each transfer arm (24, 25) comprises at least one retaining head (36), and **in that** the distance (I₁) between the at least one retaining head (36) of the first transfer arm (24) and the first axis (A1) of the first transfer arm (24) is greater than the distance (I₂) between the at least one retaining head (36) of the second transfer arm (25) and the first axis (A1') of the second transfer arm (25).

4. Transfer unit (14) according to one of the preceding claims, **characterized in that** the first receiving position (22) is further away from the first and second discharging positions (26, 27), as seen in the longitudinal direction, than the second receiving position (23), wherein the first axis (A1) of the first transfer arm (24) is arranged in the centre, as seen in the longitudinal direction, between the first receiving position (22) and the first discharging position (26), and wherein the first axis (A1') of the second transfer arm (25) is arranged in the centre, as seen in the longitudinal direction, between the second receiving position (23) and the second discharging position (27).

5. Transfer unit (14) according to one of the preceding claims, **characterized in that** the transfer arms (24, 25) are configured and activated such that, in the first and second receiving positions (22, 23), the blister packs (4, 6) are received by the retaining devices (34) of the first and second transfer arms (24, 25) from above and are set down in the discharging positions (26, 27) likewise from above.

6. Transfer unit (14) according to one of the preceding claims, **characterized in that**, in the first or second receiving location, the second segment (31, 33) of the first or second transfer arm (24, 25) has been pivoted inwards in each case in relation to the longitudinal centre plane (L), and **in that**, in the first or second discharging location, the second segment (31, 33) of the first or second transfer arm (24, 25) has been pivoted outwards in each case in relation to the longitudinal centre plane (L).

7. Transfer unit (14) according to one of the preceding claims, **characterized in that** the second segments (31, 33), and therefore the blister packs (4, 6) retained on the retaining devices (34), execute a rotary movement of essentially 180° about the respective second axis (A2, A2') when the transfer arms (24, 25) move from the first or second receiving location to the first or second discharging location, or vice versa.

8. Transfer unit (14) according to one of the preceding claims, **characterized in that** the first segments (30, 32) execute a rotary movement of 60° to 180°, preferably 120° to 180°, about the associated first axis (A1, A1') when the transfer arms (24, 25) move from the first or second receiving location to the first or second discharging location, or vice versa.

9. Transfer unit (14) according to one of the preceding claims, **characterized in that** the first and second transfer arms (24, 25) are activated such that the first and second transfer arms (24, 25) execute pivoting movements back and forth in opposite directions.

10. Transfer unit (14) according to one of the preceding claims, **characterized in that** the transfer arms (24, 25) are mounted such that they can be displaced parallel to the associated first axis (A1; A1').

11. Transfer unit (14) according to one of the preceding claims, **characterized in that** the retaining device (34) of each transfer arm (24, 25) comprises at least one retaining head (36), which is fastened on the second segment (31, 33) by means of at least one carrier arm (38).

12. Transfer unit (14) according to Claim 11, **characterized in that** the at least one carrier arm (38) is fastened rigidly on the second segment (31, 33) .

13. Method for transferring blister packs (4, 6) from a first and second receiving position (22, 23) to a first and second discharging position (26, 27) by means of a transfer unit (14), having the following steps:
- providing a first and a second blister pack (4, 6) in a first and a second receiving position (22, 23), wherein, in the first and second receiving positions (22, 23), the blister packs (4, 6) are arranged one behind the other in a longitudinal row which runs parallel to a longitudinal centre plane (L) of the transfer unit (14) and in the region of the longitudinal centre plane (L);
- receiving the first blister pack (4) in the first receiving position (22), moving the first blister pack (4) and setting down the first blister pack (4) in the first discharging position (26), wherein the first blister pack (4) is set down in the first discharging position (26) from above, wherein, in the first discharging position (26), the first blister pack (4) is arranged offset outwards in relation to the longitudinal centre plane (L), and wherein the first blister pack (4) is set down in the first discharging position (26), in comparison with the first receiving position (22), in a state in which it has been rotated through 180° about its centre point; and
- receiving the second blister pack (6) in the second receiving position (23), moving the second blister pack (6) and setting down the second blister pack (6) in the second discharging position (27), wherein the second blister pack (6) is set down in the second discharging position (27) from above, wherein, in the second discharging position (27), the second blister pack (6) is arranged offset outwards in relation to the longitudinal centre plane (L), and wherein the second blister pack (6) is set down in the second discharging position (27), in comparison with the second receiving position (23), in a state in which it has been rotated through 180° about its centre point.

14. Method according to Claim 13, **characterized in that**, in the first and second receiving positions (22, 23), the blister packs (4, 6) are received from above, and **in that**, in the first and second receiving positions (22, 23) and in the first and second discharging positions (26, 27), the blister packs (4, 6) are arranged in each case with the same side upwards.

15. Method according to Claim 13 or 14, **characterized in that**, as they move from the first and second receiving positions (22, 23) to the first and second discharging positions (26, 27), the first and second blister packs (4, 6) perform a lateral offsetting movement counter to one another in a direction transverse to the longitudinal centre plane (L).

## Revendications

1. Unité de transfert (14) pour le transfert de plaquettes thermoformées (4, 6) avec
un premier bras de transfert (24) qui est mobile entre une première position de réception pour la réception d'une première plaquette thermoformée (4) d'une première position de réception (22) et d'une première position de distribution pour la distribution de la première plaquette thermoformée (4) dans une première position de distribution (26), et
un second bras de transfert (25) qui est mobile entre une seconde position de réception pour la réception d'une seconde plaquette thermoformée (6) d'une seconde position de réception (23) et d'une seconde position de distribution pour la distribution de la seconde plaquette thermoformée (6) dans une seconde position de distribution (27),
dans laquelle le premier et le second bras de transfert (24, 25) sont agencés des deux côtés d'un plan médian longitudinal (L) de l'unité de transfert (14), dans laquelle chaque bras de transfert (24, 25) présente un premier segment (30, 32) et un second segment (31, 33), dans laquelle le premier segment (30, 32) de chaque bras de transfert (24, 25) est fixé de manière à pouvoir tourner autour d'un premier axe (A1, A1') afférent qui s'étend perpendiculairement au plan médian longitudinal (L),
dans laquelle le premier segment (30, 32) de chaque bras de transfert (24, 25) présente une section à laquelle le second segment (31, 33) est fixé de manière à pouvoir tourner autour d'un second axe (A2, A2') mobile s'étendant sensiblement perpendiculairement au premier axe (A1, A1') afférent, dans laquelle un organe de retenue (34) est agencé au niveau du second segment (31, 33) pour la réception et le maintien d'une plaquette thermoformée (4, 6),
dans laquelle les bras de transfert (24, 25) sont configurés et commandés de telle manière que le mouvement des bras de transfert (24, 25) de la première ou la seconde position de réception dans la première ou la seconde position de distribution et inversement est un mouvement combiné qui se compose au moins d'un premier mouvement de rotation du premier segment (30, 32) et du second segment (31, 33) autour du premier axe (A1, A1') et d'un second mouvement de rotation du second segment (31, 33) autour du second axe (A2, A2'),
dans laquelle la première et la seconde position de réception (22, 23) sont agencées dans la zone du plan médian longitudinal (L) dans une rangée longitudinale l'une derrière l'autre et la première et la seconde position de distribution (26, 27) sont agencées en déport par rapport au plan médian longitudinal (L) vers l'extérieur,
dans laquelle le second axe (A2) du premier bras de transfert (24) est agencé de telle manière que le second axe (A2) du premier bras de transfert (24) se déplace pendant le premier mouvement de rotation du premier segment (30) du premier bras de transfert (24) dans un premier plan (E1) que coupe la première position de réception (22) ou sa projection latérale dans une première ligne droite (L1) qui est en déport latéral du milieu (M1) de la première position de réception (22), et dans laquelle le second axe (A2') du second bras de transfert (25) est agencé de telle manière que le second axe (A2') du second bras de transfert (25) se déplace pendant le premier mouvement de rotation du premier segment (32) du second bras de transfert (25) dans un second plan (E2) que coupe la seconde position de réception (23) ou sa projection latérale dans une seconde ligne droite (L2) qui est en déport latéral du milieu (M2) de la seconde position de réception (23).

2. Unité de transfert (14) selon la revendication 1, **caractérisée en ce que** les premiers axes (A1, A1') du premier et du second bras de transfert (24, 25) sont agencés parallèlement l'un à l'autre, mais à une distance (d) l'un de l'autre dans le sens longitudinal.

3. Unité de transfert (14) selon la revendication 1 ou 2, **caractérisée en ce que** l'organe de retenue (34) de chaque bras de transfert (24, 25) comporte au moins une tête de retenue (36), et que la distance (I₁) d'au moins une tête de retenue (36) du premier bras de transfert (24) par rapport au premier axe (A1) du premier bras de transfert (24) est supérieure à la distance (I₂) d'au moins une tête de retenue (36) du second bras de transfert (25) par rapport au premier axe (A1') du second bras de transfert (25).

4. Unité de transfert (14) selon l'une des revendications précédentes, **caractérisée en ce que** la première position de réception (22) dans le sens longitudinal est plus éloignée de la première et la seconde position de distribution (26, 27) que la seconde position de réception (23), dans laquelle le premier axe (A1) du premier bras de transfert (24) dans le sens longitudinal est agencé au milieu entre la première position de réception (22) et la première position de distribution (26), et dans laquelle le premier axe (A1') du second bras de transfert (25) est agencé dans le sens longitudinal au milieu entre la seconde position de réception (23) et la seconde position de distribution (27).

5. Unité de transfert (14) selon l'une des revendications précédentes, **caractérisée en ce que** les bras de transfert (24, 25) sont configurés et commandés de telle manière que les plaquettes thermoformées (4, 6) soient reçues au niveau de la première et la seconde position de réception (22, 23) par les organes de retenue (34) du premier et du second bras de transfert (24, 25) par le haut et soient aussi distribuées par le haut dans les positions de distribution (26, 27).

6. Unité de transfert (14) selon l'une des revendications précédentes, **caractérisée en ce que** le second segment (31, 33) du premier ou du second bras de transfert (24, 25) dans la première ou la seconde position de réception est pivoté respectivement par rapport au plan médian longitudinal (L) vers l'intérieur, et **en ce que** le second segment (31, 33) du premier ou du second bras de transfert (24, 25) dans la première ou la seconde position de distribution est pivoté respectivement par rapport au plan médian longitudinal (L) vers l'extérieur.

7. Unité de transfert (14) selon l'une des revendications précédentes, **caractérisée en ce que** les seconds segments (31, 33) et ainsi les plaquettes thermoformées (4, 6) maintenues au niveau des organes de retenue (34) réalisent un mouvement de rotation autour du second axe (A2, A2') respectif sensiblement de 180° lorsque les bras de transfert (24, 25) se déplacent de la première ou la seconde position de réception dans la première ou la seconde position de distribution ou inversement.

8. Unité de transfert (14) selon l'une des revendications précédentes, **caractérisée en ce que** les premiers segments (30, 32) réalisent un mouvement de rotation autour du premier axe (A1, A1') afférent de 60° à 180°, de préférence de 120° à 180° lorsque les bras de transfert (24, 25) se déplacent de la première ou la seconde position de réception dans la première ou la seconde position de distribution ou inversement.

9. Unité de transfert (14) selon l'une des revendications précédentes, **caractérisée en ce que** le premier et le second bras de transfert (24, 25) sont commandés de telle manière que le premier et le second bras de transfert (24, 25) réalisent des mouvements de pivotement alternatifs en sens contraire.

10. Unité de transfert (14) selon l'une des revendications précédentes, **caractérisée en ce que** les bras de transfert (24, 25) sont logés de manière mobile parallèlement au premier axe (A1 ; A1') afférent.

11. Unité de transfert (14) selon l'une des revendications précédentes, **caractérisée en ce que** l'organe de retenue (34) de chaque bras de transfert (24, 25) comporte au moins une tête de retenue (36) qui est fixée au moyen d'au moins un bras de support (38) au second segment (31, 33).

12. Unité de transfert (14) selon la revendication 11, **caractérisée en ce que** l'au moins un bras de support (38) est fixé rigidement au second segment (31, 33).

13. Procédé de transfert de plaquettes thermoformées (4, 6) d'une première et d'une seconde position de réception (22, 23) dans une première et une seconde position de distribution (26, 27) au moyen d'une unité de transfert (14), avec les étapes suivantes :
- la fourniture d'une première et d'une seconde plaquette thermoformée (4, 6) dans une première et une seconde position de réception (22, 23), dans lequel les plaquettes thermoformées (4, 6) sont agencées dans la première et la seconde position de réception (22, 23) dans une rangée longitudinale qui s'étend parallèlement à un plan médian longitudinal (L) de l'unité de transfert (14) et dans la zone du plan médian longitudinal (L), l'une derrière l'autre,
- la réception de la première plaquette thermoformée (4) dans la première position de réception (22), le déplacement de la première plaquette thermoformée (4) et la distribution de la première plaquette thermoformée (4) dans la première position de distribution (26), dans lequel la première plaquette thermoformée (4) dans la première position de distribution (26) est distribuée par le haut, dans lequel la première plaquette thermoformée (4) dans la première position de distribution (26) est agencée en déport par rapport au plan médian longitudinal (L) vers l'extérieur, et dans lequel la première plaquette thermoformée (4) dans la première position de distribution (26) est distribuée en étant tournée par rapport à la première position de réception (22) de 180° autour de son point médian et
- la réception de la seconde plaquette thermoformée (6) dans la seconde position de réception (23), le déplacement de la seconde plaquette thermoformée (6) et la distribution de la seconde plaquette thermoformée (6) dans la seconde position de distribution (27), dans lequel la seconde plaquette thermoformée (6) dans la seconde position de distribution (27) est distribuée par le haut, dans lequel la seconde plaquette thermoformée (6) dans la seconde position de distribution (27) est agencée en déport par rapport au plan médian longitudinal (L) vers l'extérieur, et dans lequel la seconde plaquette thermoformée (6) dans la seconde position de distribution (27) est distribuée en étant tournée par rapport à la seconde position de réception (23) de 180° autour de son point médian.

14. Procédé selon la revendication 13, **caractérisé en ce que** les plaquettes thermoformées (4, 6) sont reçues au niveau de la première et la seconde position de réception (22, 23) par le dessus, et que les plaquettes thermoformées (4, 6) sont agencées dans la première et la seconde position de réception (22, 23) et dans la première et la seconde position de distribution (26, 27) respectivement avec le même côté vers le haut.

15. Procédé selon la revendication 13 ou 14, **caractérisé en ce que** la première et la seconde plaquette thermoformée (4, 6) exécutent pendant le déplacement de la première et la seconde position de réception (22, 23) dans la première et la seconde position de distribution (26, 27) un déport latéral opposé transversalement au plan médian longitudinal (L).
